(19) Europäisches Patentamt / European Patent Office / Office européen des brevets

(11) **EP 4 386 632 A1**

(12) **EUROPEAN PATENT APPLICATION**

(43) Date of publication:
**19.06.2024 Bulletin 2024/25**

(21) Application number: **22213403.3**

(22) Date of filing: **14.12.2022**

(51) International Patent Classification (IPC):
**G06N 3/092** $^{(2023.01)}$  **G06N 3/045** $^{(2023.01)}$

(52) Cooperative Patent Classification (CPC):
**G06N 3/092; G06N 3/045**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Vinogradska, Julia
70839 Gerlingen (DE)**
• **Peters, Jan
64342 Seeheim-Jugenheim (OT Malchen) (DE)**
• **Berkenkamp, Felix
80335 München (DE)**
• **Bottero, Alessandro Giacomo
70193 Stuttgart (DE)**
• **Luis Goncalves, Carlos Enrique
70192 Stuttgart (DE)**

Remarks:
Amended claims in accordance with Rule 137(2) EPC.

(54) **DEVICE AND METHOD FOR CONTROLLING A ROBOT**

(57)    According to various embodiments, a method for training a control policy is described, comprising estimating the variance of a value function which associates a state with a value of the state or a pair of state and action with a value of the pair by solving a Bellman uncertainty equation, wherein, for each of multiple states, the reward function of the Bellman uncertainty equation is set to the difference of the total uncertainty about the mean of the value of the subsequent state following the state and the average aleatoric uncertainty of the value of the subsequent state and biasing the control policy in training towards regions for which the estimation gives a higher variance of the value function than for other regions.

Fig. 1

EP 4 386 632 A1

**Description**

Prior Art

The present disclosure relates to devices and methods for controlling a robot.

Reinforcement Learning (RL) is a machine learning paradigm that allows a machine to learn to perform desired behaviours with respect to a task specification, e.g. which control actions to take to reach a goal location in a robotic navigation scenario. Learning a policy that generates these behaviours with reinforcement learning differs from learning it with supervised learning in the way the training data is composed and obtained: While in supervised learning the provided training data consists of matched pairs of inputs to the policy (e.g. observations like sensory readings) and desired outputs (actions to be taken), there is no fixed training data provided in case of reinforcement learning. The policy is learned from experience data gathered by interaction of the machine with its environment whereby a feedback (reward) signal is provided to the machine that scores/asses the actions taken in a certain context (state). To effectively improve the control policy, the respective reinforcement agent should explore regions of the space of states of the controlled technical system where epistemic uncertainty is high. Therefore, efficient approaches for determining epistemic uncertainty in the training of a control policy are desirable.

The publication "The Uncertainty Bellman Equation and Exploration" by Brendan O'Donoghue, Ian Osband, Remi Munos, and Volodymyr Mnih, in International Conference on Machine Learning, pages 3836-3845, 2018, in the following referred to as reference 1, describes an uncertainty Bellman equation, which may be seen as a Bellman-style relationship that propagates the uncertainty (variance) of a Bayesian posterior distribution over Q-values across multiple time-steps.

The publication "Deep Model-Based Reinforcement Learning via Estimated Uncertainty and Conservative Policy Optimization" by Qi Zhou, HouQiang Li, and Jie Wang, in AAAI Conference on Artificial Intelligence, volume 34, pages 6941-6948, April 2020, in the following referred to as reference 2, describes solving an uncertainty Bellman equation for getting an upper bound of the value function variance.

Disclosure of the Invention

According to various embodiments, a method for training a control policy is provided, including estimating the variance of a value function which associates a state with a value of the state or a pair of state and action with a value of the pair by solving a Bellman uncertainty equation, wherein, for each of multiple states, the reward function of the Bellman uncertainty equation is set to the difference of the total uncertainty about the mean of the value of the subsequent state following the state and the average aleatoric uncertainty of the value of the subsequent state and including biasing the control policy in training towards regions for which the estimation gives a higher variance of the value function than for other regions.

According to various embodiments, in other words, an uncertainty Bellman equation is solved for determining uncertainty in reinforcement learning where, in contrast to the approach of reference 2, the reward function is set to the difference of the total uncertainty about the mean values of the next state and the average aleatoric uncertainty. Redefining the reward function in the uncertainty Bellman equation with respect to reference 2 allows getting a tight estimation (rather than merely an upper bound) for the value function variance. Thus, more exact variance estimates can be obtained which may be used for exploration (e.g. by means of determining the policy by optimistic optimization) to achieve lower total regret and better sample-efficiency in exploration for tabular reinforcement learning RL and to increase sample-efficiency and stability during learning for continuous-control tasks.

In particular, biasing the policy in training towards regions with high value function variance, based on this estimation of the value function variance, i.e. preferring states or pairs of states and actions, respectively, with high variance of the value function over states or pairs of states and actions, respectively, with low variance of the value function as given by this estimation, when exploring allows achieving a more efficient training, i.e. less episodes may be required to achieve the same quality of control or a better control policy which performs better in practical application may be found.

According to various embodiments, the reward function is a local uncertainty reward function. The solution of the uncertainty Bellman equation is the variance of the value function.

In the following, various examples are given.

Example 1 is the method as described above.

Example 2 is the method of example 1, wherein the value function is a state value function and the control policy is biased in training towards regions of the state space for which the estimation gives a higher variance of the values of states than for other regions of the state space or wherein the value function is a state-action value function and the control policy is biased in training towards regions of the space of state-action pairs for which the estimation gives a higher variance of the value of pairs of states and actions than for other regions of the space of state-action pairs.

So, the approach may operate with a state value function as well as a state-action value function for selecting actions in training for exploration. The biasing may be done by considering not only the value of a state or state action pair when selecting an action but also its (estimated) value function variance.

Example 3 is the method of example 1 or 2, including setting the uncertainty about the mean of the value of the subsequent state following the state to an estimate of the variance of the mean of the value of the subsequent state and setting the average aleatoric uncertainty to the mean of an estimate of the variance of the value of the subsequent state.

Thus, the uncertainty about the mean of the value of the subsequent state and the average aleatoric uncertainty may be easily determined from data gathered in the training.

Example 4 is the method of any one of examples 1 to 3, wherein estimating the variance of the value function includes selecting one of multiple neural networks, wherein each neural network is trained to output information about a probability distribution of the subsequent state following a state input to the neural network and of a reward obtained from the state transition and determining the value function from outputs of the selected neural network for a sequence of states.

This makes it in possible to model uncertainties of the transitions by sampling from a set of multiple neural networks a neural network that gives the transition probabilities. In particular, the mean of the variance of a subsequent state may in this way be estimated by sampling from multiple neural networks. The one or more neural networks may be trained during the training from the observed data (i.e. observed transitions).

Example 5 is the method of any one of examples 1 to 4, including solving the Bellman uncertainty equation by means of a neural network trained to predict a solution of the Bellman uncertainty equation in response to the input of a state or pair of state and action value.

For example, in case of the value function being a state-action value function, a neural network may be used that receives as input state-action pairs and outputs the predicted long-term variance of the Q-value for the given input (i.e. pair of state and action).

The variance of the value function may be determined for a certain episode (from data from the episode and earlier episodes) and updating the control policy for the next episode using the result of the determination. For a state-action value function, for example, this may include optimizing optimistic estimates of the Q-values, i.e., the Q-values may be enlarged by adding the predicted standard deviation (the square root of the neural network output for solving the uncertainty Bellman equation).

Example 6 is a method for controlling a technical system, including training a control policy according to any one of examples 1 to 5 and controlling the technical system according to the trained control policy.

Example 7 is a controller, configured to perform a method of any one of examples 1 to 5.

Example 8 is a computer program including instructions which, when executed by a computer, makes the computer perform a method according to any one of examples 1 to 5.

Example 9 is a computer-readable medium including instructions which, when executed by a computer, makes the computer perform a method according to any one of examples 1 to 5.

In the drawings, similar reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a control scenario according to an embodiment.
Figure 2 illustrates a simple Markov Reward Process for illustration of the above.
Figure 3 shows a flow diagram illustrating a method for training a control policy according to an embodiment.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

In the following, various examples will be described in more detail.

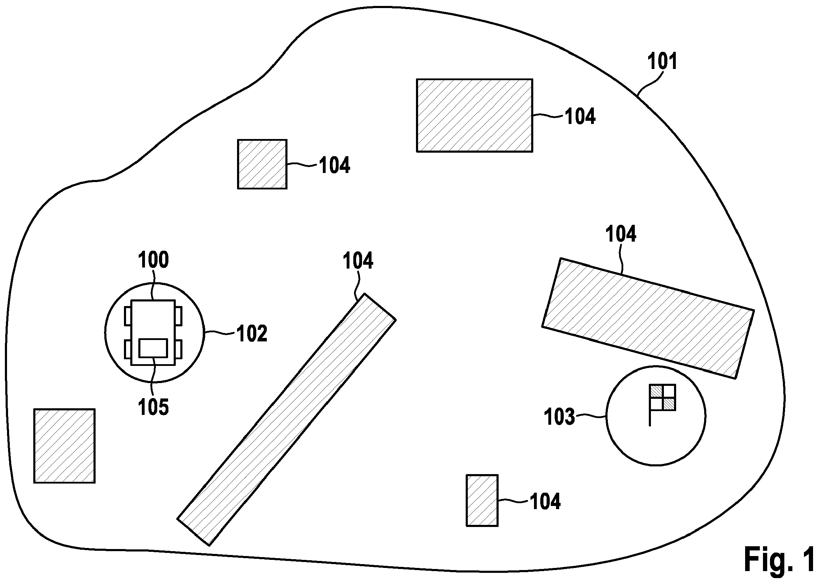

Figure 1 shows a control scenario.

A robot 100 is located in an environment 101. The robot 100 has a start position 102 and should reach a goal position 103. The environment 101 contains obstacles 104 which should be avoided by the robot 100. For example, they may not be passed by the robot 100 (e.g. they are walls, trees or rocks) or should be avoided because the robot would damage or hurt them (e.g. pedestrians).

The robot 100 has a controller 105 (which may also be remote to the robot 100, i.e. the robot 100 may be controlled by remote control). In the exemplary scenario of figure 1, the goal is that the controller 105 controls the robot 100 to navigate the environment 101 from the start position 102 to the goal position 103. For example, the robot 100 is an autonomous vehicle but it may also be a robot with legs or tracks or other kind of propulsion system (such as a deep sea or mars rover).

Furthermore, embodiments are not limited to the scenario that a robot should be moved (as a whole) between positions 102, 103 but may also be used for the control of a robotic arm whose end-effector should be moved between positions 102, 103 (without hitting obstacles 104) etc.

Accordingly, in the following, terms like robot, vehicle, machine, etc. are used as examples for the "object", i.e. computer-controlled system (e.g. machine), to be controlled. The approaches described herein can be used with different types of computer-controlled machines like robots or vehicles and other. The general term "robot device" is also used in the following to refer to all kinds of technical system which may be controlled by the approaches described in the following. The environment may also be simulated, e.g. the control policy may for example be a control policy for a virtual vehicle or other movable device, e.g. in a simulation for testing another policy for autonomous driving.

Ideally, the controller 105 has learned a control policy that allows it to control the robot 101 successfully (from start position 102 to goal position 103 without hitting obstacles 104) for arbitrary scenarios (i.e. environments, start and goal positions) in particular scenarios that the controller 105 has not encountered before.

Various embodiments thus relate to learning a control policy for a specified (distribution of) task(s) by interacting with the environment 101. In training, the scenario (in particular environment 101) may be simulated but it will typically be real in deployment.

An approach to learn a control policy is reinforcement learning (RL) where the robot 100, together with its controller 105, acts as reinforcement agent.

The goal of a reinforcement learning (RL) agent is to maximize the expected return via interactions with an a priori unknown environment. In model-based RL (MBRL), the agent learns a statistical model of the environment 101, which can then be used for efficient exploration. The performance of deep MBRL algorithms was historically lower than that of model-free methods, but the gap has been closing in recent years. Key to these improvements are models that quantify epistemic and aleatoric uncertainty and algorithms that leverage model uncertainty to optimize the policy. Still, a core challenge in MBRL is to quantify the uncertainty in the long-term performance predictions of a policy, given a probabilistic model of the dynamics . Leveraging predictive uncertainty of the policy performance during policy optimization facilitates deep exploration - methods that reason about the long-term information gain of rolling out a policy - which has shown promising results in the model-free and model-based settings.

Various embodiments use a Bayesian perspective on MBRL, which maintains a posterior distribution over possible MDPs given observed data. This distributional perspective of the RL environment 101 induces distributions over functions of interest for solving the RL problem, e.g., the expected return of a policy, also known as the value function. This perspective differs from distributional RL , whose main object of study is the distribution of the return induced by the inherent stochasticity of the MDP and the policy. As such, distributional RL models aleatoric uncertainty, whereas various embodiments focus on the epistemic uncertainty arising from finite data of the underlying MDP, and how it translates to uncertainty about the value function. In particular, the variance of such a distribution of values is taken into account in the training of the control policy.

It should be noted that upper-bounds on the posterior variance of the values can be obtained by solving a so-called uncertainty Bellman equation (UBE), see reference 1 and reference 2. However, these bounds over-approximate the variance of the values and thus may lead to inefficient exploration when used for uncertainty-aware optimization (e.g., risk-seeking or risk-averse policies). In principle, tighter uncertainty estimates have the potential to improve data-efficiency

In the following, an approach is described which is based on the fact that (under two assumptions given below), the posterior variance of the value function obeys a Bellman-style recursion exactly. According to various embodiments, the controller 105 learns to solve Bellman recursion and integrates it into training (e.g. an actor-critic framework) as an exploration signal.

In the following, an agent is considered acting in an infinite-horizon MDP

$$\mathscr{M} =$$

$$\{\mathcal{S}, \mathcal{A}, p, \rho, r, \gamma\}$$

with finite state space

$$|\mathcal{S}| = S,$$

finite action space

$$|\mathcal{A}| = A,$$

unknown transition function

$$p: \mathcal{S} \times \mathcal{A} \rightarrow \Delta(S)$$

that maps states and actions to the S-dimensional probability simplex, an initial state distribution

$$\rho: \mathcal{S} \rightarrow [0,1],$$

a known and bounded reward function

$$r: \mathcal{S} \times \mathcal{A} \rightarrow \mathrm{R},$$

and a discount factor $\gamma \in [0,1)$.

As stated above, the agent may correspond to the robot 101 together with its controller and the state space may include states that include states (also referred to as configurations) of the robot as well as states of the environment (e.g. the position of obstacles or, e.g. in a bin-picking scenario, of objects to be grasped or in general manipulated by the robot).

Although a known reward function is considered, the approach described below can be easily extended to the case where it is learned alongside the transition function. The one-step dynamics $p(s' | s, a)$ denote the probability of going from state $s$ to state $s'$ after taking action $a$. In general, the agent selects actions from a stochastic policy

$$\pi: \mathcal{S} \rightarrow \Delta(A)$$

that defines the conditional probability distribution $\pi(a | s)$. At each time step of episode $t$ the agent is in some state $s$, selects an action $a \sim \pi(\cdot | s)$, receives a reward $r(s, a)$, and transitions to a next state $s' \sim p(\cdot | s, a)$. The state value function

$$V^{\pi,p}: \mathcal{S} \rightarrow$$

R of a policy $\pi$ and transition function $p$ are defined as the expected sum of discounted rewards under the MDP dynamics,

$$V^{\pi,p}(s) = \mathrm{E}_{\tau \sim P}\left[\sum_{h=0}^{\infty} \gamma^h r(s_h, a_h) \mid s_0 = s\right], \tag{1}$$

where the expectation is taken under the random trajectories $\tau$ drawn from the trajectory distribution $P(\tau) = \prod_{h=0}^{\infty} \pi(a_h | s_h) p(s_{h+1} | s_h, a_h)$.

The training includes performing many such episodes (e.g. 1000 or more), wherein in each episode, the agent starts from a starting state (which may vary) and performs actions and reaches new states as described above until it reaches a terminal state (which may also be that a limit of the number of actions is reached). It is desirable that the agent efficiently explores the state space during these episodes such that it learns to properly react to all kinds of states that it may encounter in practical application. Therefore, for training, the control policy $\pi(\cdot | s)$ includes a degree of exploration which means that the agent does not necessarily select the action which gives the highest value (according to its current knowledge) but tries out alternate paths (i.e. "explores" to possible find better actions that those it currently knows of). In practical application (i.e. after training), this may be removed i.e. the agent then selects the action which gives the highest value.

The controller 105 uses a Bayesian setting where the transition function $p$ is a random variable with some

known prior distribution $\Phi_0$. The transition data observed up to episode $t$ is denoted as $\mathcal{D}_t$. The controller 105 updates its belief about the random variable $p$ by applying Bayes' rule to obtain the posterior distribution conditioned on $\mathcal{D}_t$, which is denoted as $\Phi_t$. The distribution of transition functions naturally induces a distribution over value functions. The main focus in the following explanation is an approach that the controller 105 may use for estimating the variance of the state value function $V^{\pi,p}$ under the posterior distribution $\Phi_t$, namely $V_{p\sim\Phi_t}[V^{\pi,p}(s)]$. The controller 105 may then use this quantity for exploring the state space (in particular the environment 101). It should be noted that the estimation of the variance is explained for the state value function V(s) but naturally extends to the case of state-action value functions Q(s, a). Herein, the term "value function" is used to refer to both a "state value function" and a "state-action value function".

The approach for estimating the variance of the state value function is based on the following two assumptions:

1) (Independent transitions). $p(s' \mid x, a)$ and $p(s' \mid y, a)$ are independent random variables if $x \neq y$.

2) (Acyclic MDP). The MDP $\mathcal{M}$ is a directed acyclic graph, i.e., states are not visited more than once in any given episode.

The first assumption holds naturally in the case of discrete state-action spaces with a tabular transition function, where there is no generalization. The second assumption is non-restrictive as any finite-horizon MDP with cycles can be transformed into an equivalent time-inhomogeneous MDP without cycles by adding a time-step variable $h$ to the state-space. Similarly, for infinite-horizon MDPs an effective horizon $H = \frac{1}{1-\gamma}$ may be considered to achieve the same. The direct consequence of these assumptions is that the random variables $V^{\pi,p}(s')$ and $p(s' \mid s, a)$ are uncorrelated.

Other quantities considered in the following are the posterior mean transition function starting from the current state-action pair $(s, a)$,

$$\overline{p}_t(\cdot \mid s, a) = \mathrm{E}_{p\sim\Phi_t}[p(\cdot \mid s, a)] \tag{2}$$

and the posterior mean value function for any

$$s \in \mathcal{S},$$

$$\overline{V}_t^{\pi}(s) = \mathrm{E}_{p\sim\Phi_t}[V^{\pi,p}(s)], \tag{3}$$

where the subscript $t$ is included to be explicit about the dependency on $\mathcal{D}_t$ of both quantities. Using (2) and (3), the local uncertainty is defined as

$$w_t(s) = \mathrm{V}_{p\sim\Phi_t}\left[\sum_{a,s'}\pi(a \mid s)p(s' \mid s, a)\overline{V}_t^{\pi}(s')\right], \tag{4}$$

and solving the UBE

$$W_t^{\pi}(s) = \gamma^2 w_t(s) + \gamma^2 \sum_{a,s'}\pi(a \mid s)\overline{p}_t(s' \mid s, a)W_t^{\pi}(s'), \tag{5}$$

gives a unique solution $W_t^{\pi}$ which satisfies $W_t^{\pi} \geq \mathrm{V}_{p\sim\Phi_t}[V^{\pi,p}(s)]$, i.e. is an upper bound for the variance of the value function (see reference 2).

In the following, the gap between the upper bound and the variance of the value function is discussed and a UBE is given whose fixed-point solution is equal to the variance of the value function and thus allows a better estimation of the variance of the value function. As stated above, this is explained for the state value function V but may be analogously done for the state-action value function Q.

The values $V^{\pi,p}$ are the fixed-point solution to the Bellman expectation equation, which relates the value of the current state s with the value of the next state *s'*. Further, under the above two assumptions, applying the expectation operator to the Bellman recursion results in $\overline{V}_t^{\pi}(s) = V^{\pi,\overline{p}_t}(s)$. The Bellman recursion propagates knowledge about the local rewards *r(s, a)* over multiple steps, so that the value function encodes the long-term value of states if the policy *π* is followed. Similarly, a UBE is a recursive formula that propagates a notion of local uncertainty, $u_t(s)$, over multiple steps. The fixed-point solution to the UBE, which are denoted as the *U*-values, encodes the long-term epistemic uncertainty about the values of a given state.

It should be noted that the approach for determining the upper bound (according to (5) and reference 2) differs from the approach given in the following only in the definition of the local uncertainty and result in *U*-values that upper-bound the posterior variance of the values. However, in the following approach, $u_t$ is defined such that the *U*-values converge exactly to the variance of values.

Specifically, it can be shown that: under the two assumptions given above, for any

$$s \in \mathcal{S}$$

and policy *π*, the posterior variance of the value function, $U_t^{\pi} = V_{p \sim \Phi_t}[V^{\pi,p}]$ obeys the uncertainty Bellman equation

$$U_t^{\pi}(s) = \gamma^2 u_t(s) + \gamma^2 \sum_{a,s'} \pi(a \mid s) \overline{p}_t(s' \mid s, a) U_t^{\pi}(s') \qquad (7)$$

where $u_t(s)$ is the local relative uncertainty defined as

$$u_t(s) = V_{a,s' \sim \pi, \overline{p}_t}\left[\overline{V}_t^{\pi}(s')\right] - E_{p \sim \Phi_t}\left[V_{a,s' \sim \pi, p}[V^{\pi,p}(s')]\right]. \qquad (8)$$

One may interpret the *U*-values from (7) as the associated state-values of an alternate uncertainty MDP,

$$\mathcal{U}_t = \{\mathcal{S}, \mathcal{A}, \overline{p}_t, \rho, \gamma^2 u_t, \gamma^2\},$$

where the agent accumulates uncertainty rewards and transitions according to the mean dynamics $\overline{p}_t$

Further, for a connection to the upper bound estimation according to (5), it can be shown that: under the above two assumptions, for any

$$s \in \mathcal{S}$$

and policy *π*, it holds that $u_t(s) =$

$w_t(s) - g_t(s)$, where $g_t(s) = E_{p \sim \Phi_t}\left[V_{a,s' \sim \pi, p}[V^{\pi,p}(s')] - V_{a,s' \sim \pi, p}\left[\overline{V}_t^{\pi}(s')\right]\right]$.

Furthermore, the gap $g_t(s)$ is non-negative, thus $u_t(s) \leq w_t(s)$.

The gap $g_t(s)$ can be interpreted as the average difference of aleatoric uncertainty about the next values with respect to the mean values. The gap vanishes only if the epistemic uncertainty goes to zero, or if the MDP and policy are both deterministic.

The above two results can be directly connected via the equality

$$\underbrace{V_{a,s' \sim \pi, \overline{p}_t}\left[\overline{V}_t^{\pi}(s')\right]}_{\text{total}} = \underbrace{w_t(s)}_{\text{epistemic}} + \underbrace{E_{p \sim \Phi_t}\left[V_{a,s' \sim \pi, p}\left[\overline{V}_t^{\pi}(s')\right]\right]}_{\text{aleatoric}}, \qquad (9)$$

which gives an interpretation: the uncertainty reward defined in (8) has two components: the first term corresponds to the total uncertainty about the mean values of the next state, which is further decomposed in (9) into an epistemic and aleatoric components. When the epistemic uncertainty about the MDP vanishes, then $w_t(s) \to 0$ and only the aleatoric component remains. Similarly, when the MDP and policy are both deterministic, the aleatoric uncertainty vanishes and

$$\mathrm{V}_{a,s' \sim \pi, \overline{p}_t} \left[ \overline{V}_t^\pi(s') \right] = w_t(s)$$

. The second term of (8) is the average aleatoric uncertainty about the value of the next state. When there is no epistemic uncertainty, this term is non-zero and exactly equal to the aleatoric term in (9) which means that $u_t(s) \to 0$. Thus, $u_t(s)$ can be interpreted as a relative local uncertainty that subtracts the average aleatoric noise out of the total uncertainty around the mean values. It should be noted that a negative $u_t(s)$ may be allowed as a consequence of highly stochastic dynamics and/or action selection.

It can further be seen that the upper bound (from (5)) is a consequence of the over approximation of the reward function used to solve the UBE. Second, the gap between the exact reward function $u_t(s)$ and the approximation $w_t(s)$ is fully characterized by $g_t(s)$ and brings interesting insights. In particular, the influence of the gap term depends on the stochasticity of the dynamics and the policy. In the limit, the term vanishes under deterministic transitions and action selection. In this scenario, the upper-bound from (5) becomes tight.

So, by solving (7), the controller may determine the exact epistemic uncertainty about the values by considering the inherent aleatoric uncertainty of the MDP and the policy. The controller 105 can thus explore regions of high epistemic uncertainty, where new knowledge can be obtained. In other words, solving (7) allows the controller 105 to disentangle the two sources of uncertainty, which allows effective exploration. If the variance estimate fuses both sources of uncertainty, then the agent could be guided to regions of high uncertainty but with little information to be gained.

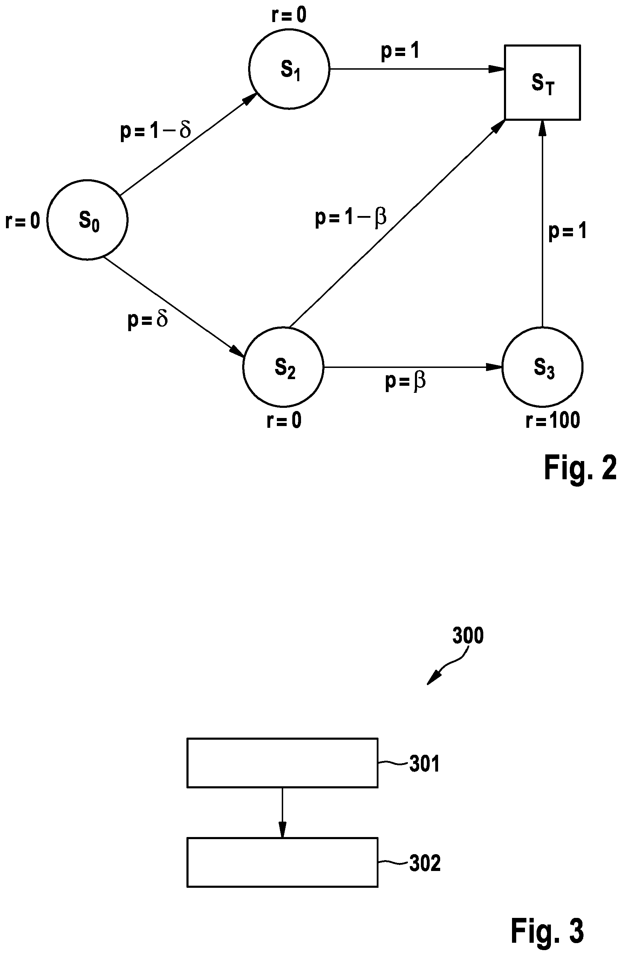

Figure 2 illustrates a simple Markov Reward Process for illustration of the above.

The random variables $\delta$ and $\beta$ indicate epistemic uncertainty about the MRP. State $s_T$ is an absorbing (terminal) state.

Assume that $\delta$ and $\beta$ to be random variables drawn from a discrete uniform distribution $\delta \sim \mathrm{Unif}(\{0.7, 0.6\})$ and $\beta \sim \mathrm{Unif}(\{0.5, 0.4\})$. As such, the distribution over possible MRPs is finite and composed of all possible combinations of $\delta$ and $\beta$.

It should be noted that the example satisfies the above two assumptions. Table 1 gives the results for the uncertainty rewards and solution to the respective UBEs (the results for $s_1$ and $s_3$ are trivially zero).

Table 1

| States | $u(s)$ | $w(s)$ | $W^\pi(s)$ | $U^\pi(s)$ |
|---|---|---|---|---|
| $s_0$ | -0.6 | 5.0 | 21.3 | 15.7 |
| $s_2$ | 25.0 | 25.0 | 25.0 | 25.0 |

For state $s_2$, the upper-bound $W^\pi$ is tight and $W^\pi(s_2) = U^\pi(s_2)$. In this case, the gap vanishes not because of lack of stochasticity, but rather due to lack of epistemic uncertainty about the next values. Indeed, the MRP is entirely known beyond state $s_2$. On the other hand, for state $s_0$ the gap is non-zero and $W^\pi$ overestimates the variance of the value by ~ 36%. The UBE formulation of (8) prescribes a negative reward to be propagated in order to obtain the correct posterior variance. The $U$-values converge to the true posterior variance of the values, while $W^\pi$ obtains an upper-bound.

The controller 105 may leverage the uncertainty quantification of $Q$-values for reinforcement learning as follows. It should be noted that the following is explained for the state-action value function Q rather than the state value function used in (8). However, as stated above, the above results analogously hold for the state-action value function Q by using .

$$U_t^\pi(s, a) = \gamma^2 u_t(s, a) + \gamma^2 \sum_{a', s'} \pi(a' \mid s') \overline{p}_t(s' \mid s, a) U_t^\pi(s', a'), \qquad (10)$$

and

$$u_t(s, a) = \mathrm{V}_{a', s' \sim \pi, \overline{p}_t} \left[ \overline{Q}_t^\pi(s', a') \right] - \mathrm{E}_{p \sim \Phi_t} \left[ \mathrm{V}_{a', s' \sim \pi, p} [Q^{\pi, p}(s', a')] \right] \qquad (11)$$

instead of (8) and (9), respectively.

A general setting with unknown rewards assumed and $\Gamma_t$ denotes the posterior distribution over MDPs, from which the controller 105 can sample both reward and transition functions. Let $\widehat{U}_t^\pi$ be an estimate of the posterior variance over Q-values for some policy $\pi$ at episode $t$ (in particular $\widehat{U}_t^\pi$ may be the solution of (10) which the controller 105 determines). Then, the controller 105 determines the policy (for training) by solving the upper-confidence bound (UCB) optimization problem

$$\pi_t = \text{argmax}_\pi \overline{Q}_t^\pi + \lambda \sqrt{\widehat{U}_t^\pi}, \qquad (12)$$

where $\overline{Q}_t^\pi$ is the posterior mean value function and A is a parameter that trades off exploration and exploitation.

After training, the controller 105 may simply use $\pi = \text{argmax}_\pi \overline{Q}_T^\pi$ where $\overline{Q}_T^\pi$ is the final state-action value function the controller 105 obtains from training (i.e. from the last episode).

According to various embodiments, the controller 105 uses algorithm 1 to estimate $\overline{Q}_t^\pi$ and $\widehat{U}_t^\pi$.

---

**Algorithm 1** Model-based $Q$-variance estimation

1: **Input:** Posterior MDP $\Gamma_t$, policy $\pi$.
2: $\{p_i, r_i\}_{i=1}^N \leftarrow$ sample_mdp($\Gamma_t$)
3: $\bar{Q}_t^\pi, \{Q_i\}_{i=1}^N \leftarrow$ solve_bellman$\left(\{p_i, r_i\}_{i=1}^N, \pi\right)$
4: $\hat{U}_t^\pi \leftarrow$ qvariance$\left(\{p_i, r_i, Q_i\}_{i=1}^N, \bar{Q}_t^\pi, \pi\right)$

---

So, to estimate the posterior variance of the Q-values, algorithm 1 takes as input: (i) a posterior distribution over plausible MDPs $\Gamma_t$ and (ii) some current version of the policy $\pi$ that is evaluated. Then algorithm 1 proceeds as follows:

1. sample a finite number of MDPs from $\Gamma_t$
2. From the sampled MDPs, solve the Bellman expectation equation for each sampled MDP and compute the mean $\overline{Q}_t^\pi$

3. Using all the above information, approximately solve the UBE (10) to obtain the variance estimate.

This variance estimation can then be plugged into a standard policy iteration methods to solve the general optimistic RL problem of (12).

The controller 105 samples an ensemble of N MDPs from the current posterior $\Gamma_t$ in line 2 of algorithm 1 and uses it to solve the Bellman expectation equation in line 3, resulting in an ensemble of N Q functions and the posterior mean $\overline{Q}_t^\pi$. Lastly, it estimates $\widehat{U}_t^\pi$ in line 4 via a generic variance estimation method qvariance for which it may use one of three implementations

- ensemble-var computes a sample-based approximation of the variance given by $\mathbb{V}[Q_i]$;
- pombu uses the solution to the UBE (5); and
- exact-ube uses the solution to the UBE (10) according to the approach described above.

The controller 105 may alternate between these three estimation approaches but, according to various embodiments, uses exact-ube for at least some episodes.

In practice, typical RL techniques for model learning may break the theoretical assumptions. For tabular implementations, flat prior choices like a Dirichlet distribution violate the second assumption while function approximation introduces correlations between states and thus violates the first assumption. A challenge arises in this practical setting: exact-ube may result in negative *U*-values, as a combination of (*i*) the assumptions not holding and (*ii*) the possibility of negative uncertainty rewards. While (*i*) cannot be easily resolved, the controller 105 may use a practical upper-bound on the solution of (7) or (10), respectively, such that the resulting *U*-values are non-negative and hence interpretable as variance estimates. Specifically, clipped uncertainty rewards $\tilde{u}_t = \max(u_{\min}, u_t(s))$ with corresponding *U*-values $\widetilde{U}_t^\pi$ may be used. It can be seen that, if $u_{\min} = 0$, then $W_t^\pi(s) \geq \widetilde{U}_t^\pi(s) \geq U_t^\pi(s)$ , which means that using $\widetilde{U}_t^\pi$ still results in a tighter upper-bound on the variance than $W_t^\pi$ , while preventing non-positive solutions to the UBE.

In the following, this notation is dropped and it is assumed all *U*-values are computed from clipped uncertainty rewards. It should be noted that pombu does not have this problem, since $w_t(s)$ is already non-negative.

The controller 105 may use a Dirichlet prior on the transition function and a standard Normal prior for the rewards which leads to closed-form posterior updates. After sampling *N* times from the MDP posterior (line 2 of algorithm 1), it obtains the *Q*-functions (line 3) in closed-form by solving the corresponding Bellman equation. For the UBE-based approaches, the controller 105 may estimate uncertainty rewards via approximations of the expectations and variances therein. Lastly, the controller 105 may solve (12) via policy iteration until convergence is achieved or until a maximum number of steps is reached.

According to various embodiments, a deep RL implementation is used, i.e. the controller 105 implements a deep RL architecture to scale for a continuous state-action space. In that case, approximating the sum of cumulative uncertainty rewards allows for uncertainty propagation.

For this, a baseline MBPO (Model-Based Policy Optimization) may be used. In contrast to the tabular implementation, maintaining an explicit distribution over MDPs from which the controller 105 sample is intractable. Instead, the controller 105 considers $\Gamma_t$ to be a discrete uniform distribution of *N* probabilistic neural networks, denoted $p_\theta$ that output the mean and covariance of a Gaussian distribution over next states and rewards. In this case, the output of line 2 of algorithm 1 includes sampling from the set of neural networks.

MBPO trains *Q*-functions represented as neural networks via TD-learning on data generated via model-randomized k-step rollouts from initial states sampled from $\mathcal{D}_t$ . Each forward prediction of the rollout comes from a randomly selected model of the ensemble and the transitions are stored in a single replay buffer $\mathcal{D}_{\mathrm{model}}$ , which is then fed into a model-free optimizer like soft actor-critic (SAC). SAC trains a stochastic policy represented as a neural network with parameters $\phi$, denoted $\pi_\phi$. The policy's objective function is similar to (12) but with entropy regularization instead of the uncertainty term. In practice, the argmax is replaced by *G* steps of stochastic gradient ascent, where the policy gradient is estimated via mini-batches drawn from $\mathcal{D}_{\mathrm{model}}$ . requires a few modifications from the MBPO methodology. To implement line 3 of algorithm 1, in addition to $\mathcal{D}_{\mathrm{model}}$ , the controller 105 implements N buffers $\{\mathcal{D}_{\mathrm{model}}^i\}_{i=1}^N$ filled with model-consistent rollouts, where each k-step rollout is generated under a single model of the ensemble, starting from initial states sampled from $\mathcal{D}_t$ . The controller 105 trains an ensemble of *N* value functions $\{Q_i\}_{i=1}^N$ , parameterized by $\{\psi_i\}_{i=1}^N$ and minimizes the residual Bellman error with entropy regularization

$$\mathcal{L}(\psi_i) = \mathbb{E}_{(s,a,r,s')\sim \mathcal{D}_t^i}\left[\left(y_i - Q_i(s,a;\psi_i))\right)^2\right],$$

$$(13)$$

where $y_i = r + y\,(Q_i(s',a';\overline{\psi_i}) - \alpha\log\pi_\phi(a' \mid s'))$ and $\overline{\psi_i}$ are the target network parameters updated via polyak averaging for stability during training . The mean *Q*-values, $\overline{Q}_t^\pi$ , are estimated as the average value of the *Q* -ensemble.

Further, according to various embodiments, to approximate the solution to the UBE, the controller 105 trains a neural network parameterized by a vector $\varphi$, denoted $U_\varphi$ (informally, the *U*-net). The controller 105 biases the output of the *U*-net to be positive (and thus interpretable as a variance) by using a softplus output layer. The controller 105 carries out training by minimizing the uncertainty Bellman error:

$$\mathcal{L}(\varphi) = \mathrm{E}_{(s,a,r,s') \sim \mathcal{D}_{\mathrm{model}}} \left[ \left( z - U(s, a; \varphi) \right)^2 \right], \qquad (14)$$

with targets $z = \gamma^2 u(s, a) + \gamma^2 U(s',a';\overline{\varphi})$ and target parameters $\overline{\varphi}$ updated like in regular critics. Lastly, the controller optimizes $\pi_\phi$ as in MBPO via SGD (stochastic gradient descent) on the SAC policy loss, but also adding the uncertainty term from (12). Algorithm 2 gives a detailed example of this approach.

---

**Algorithm 2** MBPO-style optimistic learning

---
1: Initialize policy $\pi_\phi$, predictive model $p_\theta$, critic ensemble $\{Q_i\}_{i=1}^N$, uncertainty net $U_\psi$ (optional), environment dataset $\mathcal{D}_t$, model datasets $\mathcal{D}_{\mathrm{model}}$ and $\{\mathcal{D}_{\mathrm{model}}^i\}_{i=1}^N$.
2: global step $\leftarrow 0$
3: **for** episode $t = 0, \ldots, T - 1$ **do**
4:    **for** $E$ steps **do**
5:       **if** global step % $F == 0$ **then**
6:          Train model $p_\theta$ on $\mathcal{D}_t$ via maximum likelihood
7:          **for** $M$ model rollouts **do**
8:             Perform $k$-step model rollouts starting from $s \sim \mathcal{D}_t$; add to $\mathcal{D}_{\mathrm{model}}$ and $\{\mathcal{D}_{\mathrm{model}}^i\}_{i=1}^N$
9:       Take action in environment according to $\pi_\phi$; add to $\mathcal{D}_t$
10:       **for** $G$ gradient updates **do**
11:          Update $\{Q_i\}_{i=1}^N$ with mini-batches from $\{\mathcal{D}_{\mathrm{model}}^i\}_{i=1}^N$, via SGD on (10)
12:          (Optional) Update $U_\psi$ with mini-batches from $\mathcal{D}_{\mathrm{model}}$, via SGD on (11)
13:          Update $\pi_\phi$ with mini-batches from $\mathcal{D}_{\mathrm{model}}$, via stochastic gradient ascent on the optimistic values of (9)
14:    global step $\leftarrow$ global step $+1$

---

In particular,

- In line 8, the controller 105 performs a total of $N + 1$ $k$-step rollouts corresponding to both the model-randomized and model-consistent rollout modalities.

- In line 11, the controller 105 updates the ensemble of $Q$-functions on the corresponding model-consistent buffer. MBPO trains twin critics (as in SAC) on mini-batches from $\mathcal{D}_{\mathrm{model}}$.

- In line 12, the controller 105 updates the $U$-net for the UBE-based variance estimation methods.

- In line 13, the controller 105 updates $\pi_\phi$ by maximizing the optimistic $Q$-values. MBPO maximizes the minimum of the twin critics (as in SAC). Both approaches include an entropy maximization term.

Table 2 gives the values of hyperparameters for an example application.

Table 2

| Hyperparameter | |
|---|---|
| $T$ - # episodes | 75 |
| $E$ - # steps per episode | 400 |
| $G$ - policy updates per step | 20 |
| $M$ - # model rollouts per step | 400 |
| $F$ - frequency of model retraining (# | 250 |
| steps) | |
| retain updates | 1 |

(continued)

| Hyperparameter | |
|---|---|
| $N$ - ensemble size | 5 |
| $\lambda$ - exploration gain | 1 |
| $k$ - rollout length | 30 |
| Model network | MLP with 4 layers of size 200, SiLU nonlinearities |
| Policy network | MLP with 2 layers of size 64, tanh nonlinearities |
| $Q$ and $U$ networks | MLP with 2 layers of size 256, tanh nonlinearities |

It should be noted that in tabular RL, exact-ube solves $N + 2$ Bellman equations, pombu solves two and ensemble-var solves $N + 1$. In deep RL (such as algorithm 2), UBE-based approaches have the added complexity of training the neural network for solving the uncertainty Bellman equation, but it can be parallelized with the Q-ensemble training. Despite the increased complexity, the UBE-based approach performs well for small $N$, reducing the computational burden.

In summary, according to various embodiments, a method is provided as illustrated in figure 3.

Figure 3 shows a flow diagram 300 illustrating a method for training a control policy according to an embodiment.

In 301, the variance of a value function which associates a state with a value of the state or a pair of state and action with a value of the pair is estimated. This is done by solving a Bellman uncertainty equation, wherein, for each of multiple states, the reward function of the Bellman uncertainty equation is set to the difference of the total uncertainty about the mean of the value of the subsequent state following the state and the average aleatoric uncertainty of the value of the subsequent state.

In 302, the control policy is biased in training towards regions for which the estimation gives a higher variance of the value function than for other regions.

The approach of figure 3 can be used to compute a control signal for controlling a technical system, like e.g. a computer-controlled machine, like a robot, a vehicle, a domestic appliance, a power tool, a manufacturing machine, a personal assistant or an access control system. According to various embodiments, a policy for controlling the technical system may be learnt (by reinforcement learning) and then the technical system may be operated according to the learned (i.e. trained) policy.

The uncertainty Bellman equation can be seen as a Bellman equation that is applied to variance of a value function (rather than the value function itself), i.e. it is a recursive equation (in the form of a Bellman equation) for the variance of a value function. The value function is replaced by the variance of the value function and the reward function is replaced (or set to) the difference of the total uncertainty about the mean of the value of the subsequent state following the state (see equation (8) and equation (11) for concrete examples of the reward and equations (9) and (10) for the resulting Bellman equation for the case of the state value function and the state-action value function, respectively).

The approach of figure 3 may be used within the context of model-based reinforcement learning (MBRL), where the objective is to train a model of the environment and use it for optimizing a policy, whose objective is to maximize some notion of reward. It allows quantifying uncertainty in this context and leveraging the uncertainty representation to guide the policy training process, in order to effectively explore the environment and improve sample efficiency. This is useful in practice because in many application (especially involving physical systems) gathering data is expensive, and it is desirable to minimize the amount of interactions with the controlled system (including the environment) for training a performant policy.

Various embodiments may receive and use image data (i.e. digital images) from various visual sensors (cameras) such as video, radar, LiDAR, ultrasonic, thermal imaging, motion, sonar etc., for obtaining a discrete or continuous signal that provides information about the environment, for example to obtain observations about the states and/or rewards.

According to one embodiment, the method is computer-implemented.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the claims and the equivalents thereof.

**Claims**

1. A method for training a control policy, comprising:

   Estimating the variance of a value function which associates a state with a value of the state or a pair of state and action with a value of the pair by solving a Bellman uncertainty equation, wherein, for each of multiple states, the reward function of the Bellman uncertainty equation is set to the difference of the total uncertainty about the mean of the value of the subsequent state following the state and the average aleatoric uncertainty of the value of the subsequent state; and
   Biasing the control policy in training towards regions for which the estimation gives a higher variance of the value function than for other regions.

2. The method of claim 1, wherein the value function is a state value function and the control policy is biased in training towards regions of the state space for which the estimation gives a higher variance of the values of states than for other regions of the state space or wherein the value function is a state-action value function and the control policy is biased in training towards regions of the space of state-action pairs for which the estimation gives a higher variance of the value of pairs of states and actions than for other regions of the space of state-action pairs.

3. The method of claim 1 or 2, comprising setting the uncertainty about the mean of the value of the subsequent state following the state to an estimate of the variance of the mean of the value of the subsequent state and setting the average aleatoric uncertainty to the mean of an estimate of the variance of the value of the subsequent state.

4. The method of any one of claims 1 to 3, wherein estimating the variance of the value function comprises selecting one of multiple neural networks, wherein each neural network is trained to output information about a probability distribution of the subsequent state following a state input to the neural network and of a reward obtained from the state transition and determining the value function from outputs of the selected neural network for a sequence of states.

5. The method of any one of claims 1 to 4, comprising solving the Bellman uncertainty equation by means of a neural network trained to predict a solution of the Bellman uncertainty equation in response to the input of a state or pair of state and action value.

6. A method for controlling a technical system, comprising training a control policy according to any one of claims 1 to 5 and controlling the technical system according to the trained control policy.

7. A controller, configured to perform a method of any one of claims 1 to 5.

8. A computer program comprising instructions which, when executed by a computer, makes the computer perform a method according to any one of claims 1 to 5.

9. A computer-readable medium comprising instructions which, when executed by a computer, makes the computer perform a method according to any one of claims 1 to 5.

**Amended claims in accordance with Rule 137(2) EPC.**

1. A computer-implemented method for training a control policy for controlling movement of a robot device, comprising:

   Performing a plurality of episodes, wherein in each episode, the robot device starts from a starting state and performs actions and reaches other states by state transitions, wherein for each episode, the robot device visits each of the starting state and the other states at most once during the episode and wherein the probabilities of two different states transitioning to a given state are independent;
   Estimating the variance of a value function which associates a state with a value of the state or a pair of state and action with a value of the pair by solving a Bellman uncertainty equation, wherein, for each of multiple states, the reward function of the Bellman uncertainty equation is set to the difference of the total uncertainty about the mean of the value of the subsequent state following the state and the average aleatoric uncertainty of the value of the subsequent state; and
   Biasing the control policy in training towards regions for which the estimation gives a higher variance of the value function than for other regions.

2. The method of claim 1, wherein the value function is a state value function and the control policy is biased in training towards regions of the state space for which the estimation gives a higher variance of the values of states than for other regions of the state space or wherein the value function is a state-action value function and the control policy is biased in training towards regions of the space of state-action pairs for which the estimation gives a higher variance of the value of pairs of states and actions than for other regions of the space of state-action pairs.

3. The method of claim 1 or 2, comprising setting the uncertainty about the mean of the value of the subsequent state following the state to an estimate of the variance of the mean of the value of the subsequent state and setting the average aleatoric uncertainty to the mean of an estimate of the variance of the value of the subsequent state.

4. The method of any one of claims 1 to 3, wherein estimating the variance of the value function comprises selecting one of multiple neural networks, wherein each neural network is trained to output information about a probability distribution of the subsequent state following a state input to the neural network and of a reward obtained from the state transition and determining the value function from outputs of the selected neural network for a sequence of states.

5. The method of any one of claims 1 to 4, comprising solving the Bellman uncertainty equation by means of a neural network trained to predict a solution of the Bellman uncertainty equation in response to the input of a state or pair of state and action value.

6. A method for controlling a technical system, comprising training a control policy according to any one of claims 1 to 5 and controlling the technical system according to the trained control policy.

7. A controller, configured to perform a method of any one of claims 1 to 5.

8. A computer program comprising instructions which, when executed by a computer, makes the computer perform a method according to any one of claims 1 to 5.

9. A computer-readable medium comprising instructions which, when executed by a computer, makes the computer perform a method according to any one of claims 1 to 5.

Fig. 1

**Fig. 2**

**Fig. 3**

Europäisches
Patentamt

European
Patent Office

Office européen
des brevets

# EUROPEAN SEARCH REPORT

Application Number

EP 22 21 3403

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | QI ZHOU, HOUQIANG LI, JIE WANG: "Deep Model-Based Reinforcement Learning via Estimated Uncertainty and Conservative Policy Optimization", AAAI CONFERENCE ON ARTIFICIAL INTELLIGENCE, vol. 34, April 2020 (2020-04), pages 6941-6948, XP002808925, * abstract * * section 1, lines 38-47 * * section 2, lines 31-41 * * section 3, lines 3-4 * * section 3, lines 19 * * section 3, lines 40-41 * * section 5 * * section 6, lines 27-30 * * page 6944, column 1, line 20 - line 28 * * page 6943, column 2, line 3 - line 11 * * equation (1) * * algorithms 1-2 * | 1-9 | INV. G06N3/092 G06N3/045 |
| X,D | BRENDAN O'DONOGHUE ET AL: "The Uncertainty Bellman Equation and Exploration", ARXIV.ORG, CORNELL UNIVERSITY LIBRARY, 201 OLIN LIBRARY CORNELL UNIVERSITY ITHACA, NY 14853, 15 September 2017 (2017-09-15), XP080821622, * abstract * * section 2 * * section 3 * * algorithm 1 * | 1-9 | TECHNICAL FIELDS SEARCHED (IPC) G06N |

The present search report has been drawn up for all claims

| Place of search | Date of completion of the search | Examiner |
|---|---|---|
| The Hague | 16 April 2023 | Aoun, Marc |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BRENDAN O'DONOGHUE ; IAN OSBAND ; REMI MUNOS ; VOLODYMYR MNIH.** The Uncertainty Bellman Equation and Exploration. *International Conference on Machine Learning,* 2018, 3836-3845

- **QI ZHOU ; HOUQIANG LI ; JIE WANG.** Deep Model-Based Reinforcement Learning via Estimated Uncertainty and Conservative Policy Optimization. *AAAI Conference on Artificial Intelligence,* April 2020, vol. 34, 6941-6948